Europäisches Patentamt

European Patent Office

Office européen des brevets

(11) Veröffentlichungsnummer: **0 308 771**
**B1**

## EUROPÄISCHE PATENTSCHRIFT

(45) Veröffentlichungstag der Patentschrift:
05.12.90

(21) Anmeldenummer: 88114913.2

(22) Anmeldetag: 13.09.88

(51) Int. Cl.⁵: **B29C 67/22**, B29D 9/00
// B29K105:04, B29L31:58

(54) Verfahren und Vakuumformwerkzeug zum Herstellen von Polstern mit hinterschäumtem Bezug.

(30) Priorität: 23.09.87 DE 3731994

(43) Veröffentlichungstag der Anmeldung:
29.03.89 Patentblatt 89/13

(45) Bekanntmachung des Hinweises auf die Patenterteilung:
05.12.90 Patentblatt 90/49

(84) Benannte Vertragsstaaten:
BE DE ES FR GB IT NL SE

(56) Entgegenhaltungen:
EP-A- 0 033 116
AT-B- 358 268
DE-A- 3 034 973
DE-C- 3 506 230

(73) Patentinhaber: BAYER AG,
D-5090 Leverkusen 1 Bayerwerk(DE)
Patentinhaber: Fritsche-Möllmann GmbH & Co. KG,
Hansaring 6, D-4531 Lotte(DE)

(72) Erfinder: Onnenberg, Volker, Dipl.-Ing., Schaessburger
Gasse 2, D-5276 Wiehl(DE)
Erfinder: Möllmann, Günter, Am Hoehneberg 2,
D-4506 Hagen(DE)

## Beschreibung

Die Erfindung betrifft ein Verfahren und ein Vakuumformwerkzeug zum Herstellen von Polstern mit hinterschäumtem Bezug, wobei ein Bezugstoffabschnitt über einen Formhohlraum gespannt, auf dessen ihn umgebenden Rand niedergehalten, aber unter der Einwirkung von Vakuum in den Formhohlraum nachgleiten gelassen und auch an starke längliche Konturierungen (Stege, Rillen) des Formhohlraumes angelegt und angepaßt wird, anschließend hinterschäumt und der entstehende Weichschaumstoffkern aushärten gelassen und das fertige Polster entformt wird (DE-C1-3 506 230).

Das neue Vakuumformwerkzeug zum Herstellen von Polstern mit hinterschäumtem Bezug geht davon aus, daß dessen untere Formwerkzeughälfte einen Formhohlraum mit starken, länglichen Konturierungen (Stege, Rillen) aufweist, welcher von einem Rand umgeben ist, wobei diesem Rand ein Spannrahmen zugeordnet ist (DE-C1-3 506 230).

Polster, insbesondere Sitzpolster für Kraftfahrzeuge, weisen des öfteren längliche Konturierungen auf, beispielsweise längs- oder querverlaufende, stegartige Wülste oderLängs-Querrillen. Letztere werden in der Fachsprache als "Pfeifen" bezeichnet.

Es bereitet immer wieder Schwierigkeiten, den Bezugstoffabschnitt beim Einziehen durch Vakuum in den Formhohlraum vollflächig an solche starken Konturierungen anzulegen. Dadurch entstehen beim Hinterschäumen unerwünschte Falten oder nicht ausgeschäumte Stellen.

Es besteht die Aufgabe, ein Verfahren und ein Vakuumformwerkzeug zu schaffen, womit das vollflächige Anlegen des Bezugstoffabschnittes an starke, längliche Konturierungen des Formhohlraumes, wie Stege oder Rillen, begünstigt wird.

Gelöst wird diese Aufgabe dadurch, daß der Bezugstoffabschnitt bereits beim Spannen - den Konturierungen des Formhohlraumes entsprechend - im Bereich von Rand und Spannrahmen wenigstens annähernd angepaßt wird.

Dadurch wird erreicht, daß bereits vor dem Hineingleiten des Bezugstoffabschnittes in den Formhohlraum die Konturierungen grob vorgeformt werden, indem die durch die entsprechenden Konturierungen von Rand und Spannrahmen in den Bezugstoffabschnitt geformten Falten oder Wölbungen sich in den über dem Formhohlraum befindlichen Bereich des Bezugstoffabschnittes fortsetzen. Beim Einziehen bleiben diese Verformungen im wesentlichen erhalten und erfahren beim Anlegen an die Konturierungen des Formhohlraumes die entsprechende Feinverformung. Neben der Vermeidung unerwünschter Falten und unerwünschter hohler Stellen im fertigen Polster wird auch der Einziehvorgang beschleunigt.

Das Neue am Formwerkzeug ist darin zu sehen, daß auf dem bzw. im Rand den Konturierungen des Formhohlraumes wenigstens annähernd entsprechende und in deren Richtung verlaufende Konturierungen vorgesehen sind und daß der Spannrahmen diesen, dem Rand zugeordneten Konturierungen entsprechende negative Konturierungen aufweist. Es bereitet keine großen Probleme, im Rand und im Spannrahmen entsprechende Konturierungen vorzusehen. Man kann sie direkt ein- bzw. anformen. Es versteht sich von selbst, daß zwischen den Konturierungen des Randes und den zugeordneten negativen Konturierungen des Spannrahmens ein Spalt für die Aufnahme des Bezugstoffabschnittes vorhanden sein muß.

Die Konturierungen sind vorzugsweise in austauschbaren Einsatz- bzw. Aufsatzstücken vorgesehen.

Dies ist besonders günstig, wenn wechselnde Bezugstoffabschnitte unterschiedlicher Stärke verarbeitet werden müssen. Durch den Austausch solcher Einsatzstücke läßt sich in diesem Falle nämlich der von den Flanken der Konturierungen gebildete Spalt entsprechend bemessen.

Gemäß einer weiteren besonderen Ausführungsform erweitern sich die Konturierungen nach außen zu und flachen sich dabei ab.

Dadurch wird beim Einziehen die Bildung der Verformung des Bezugstoffabschnittes begünstigt.

Eine weitere, besonders günstige Ausführungsform ist dadurch gekennzeichnet, daß der zwischen den Konturierungen des Randes und des Spannrahmens gebildete Spalt sich zum Formhohlraum hin verjüngt.

Auch durch diese Maßnahme wird der Einziehvorgang durch eine bessere Führung des Bezugstoffabschnittes optimiert.

In der Zeichnung ist das neue Vakuumformwerkzeug in einem Ausführungsbeispiel rein schematisch dargestellt und nachstehend näher erläutert.

Es zeigen:

Fig. 1 einen Schnitt durch ein Vakuumformwerkzeug mit Spannrahmen,

Fig. 2 eine Draufsicht auf die Arbeitsseite des Spannrahmens,

Fig. 3 eine Draufsicht auf die untere Formwerkzeughälfte ohne Spannrahmen,

Fig. 4 einen Schnitt gemäß Linie A-B in Fig. 1,

Fig. 5 einen Schnitt gemäß Linie C-D in Fig. 1 und

Fig. 6 die Anordnung einer Konturierung des Randes in einem Einsatzstück und die Anordnung der zugehörigen Konturierung des Spannrahmens in einem Einsatzstück.

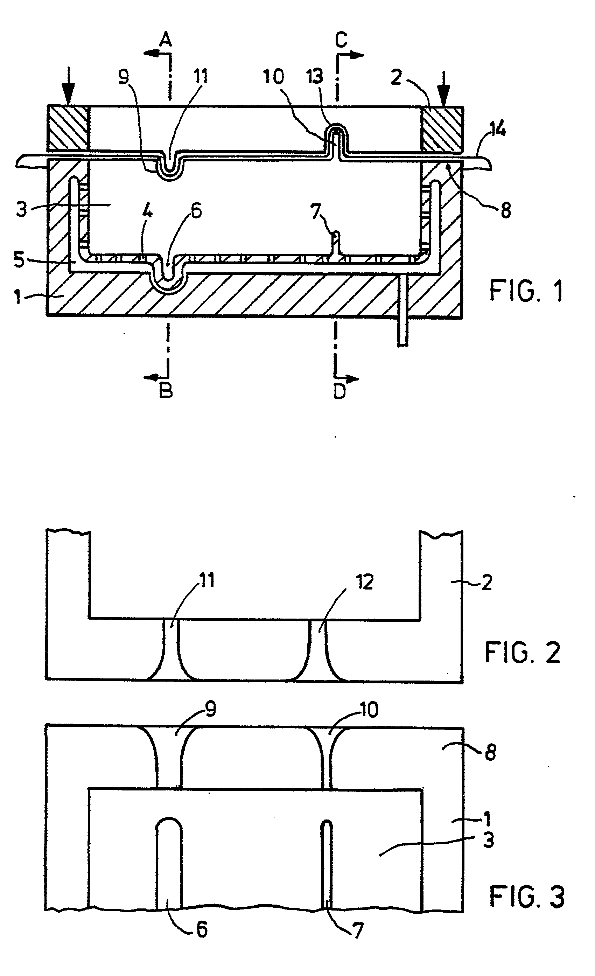

In Fig. 1 bis 5 besteht das Vakuumformwerkzeug aus einer unteren Formwerkzeughälfte 1, welcher ein Spannrahmen 2 zugeordnet ist, sowie einer nicht dargestellten oberen Formwerkzeughälfte. In der Formwerkzeughälfte 1 ist ein Formhohlraum 3 angeordnet, welcher über Kanäle 4 an eine Vakuumkammer 5 angeschlossen ist, welche ihrerseits mit einer nicht dargestellten Vakuumpumpe verbunden ist. Am Boden des Formhohlraumes 3 sind Konturierungen 6, 7 angeordnet, und zwar eine Konturierung in Form einer Rille 6 und eine Konturierung in Form eines Steges 7. Diese Konturierungen 6, 7 setzen sich an dem den Formhohlraum 3 umgebenden Rand 8 als Konturierungen 9 (Rille) und 10 (Steg) sowie dem Spannrahmen 2 als dazu negative Konturierungen 11 und 12 fort. Diese Konturierungen 9, 10, 11, 12 flachen sich nach außen zu ab, und der dazwischen gebildete Spalt 13 vergrößert sich nach außen zu. Ein Bezugstoffabschnitt 14 ist in eingespanntem Zustand dargestellt.

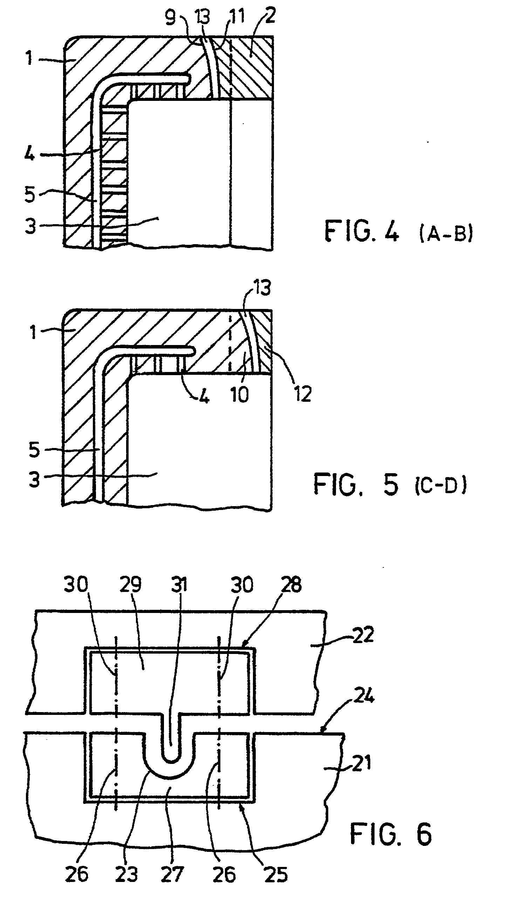

In Fig. 6 sind Formwerkzeughälfte 21 und Spannrahmen 22 im Abriß dargestellt. Die Konturierung 23 des Randes 24 ist hier in einem in einer Ausnehmung 25 des Randes 24 mit Schrauben 26 austauschbar befestigten Einsatzstück 27 angeordnet. In gleicher Weise ist im Spannrahmen 22 eine Ausnehmung 28 vorgesehen, in welcher ein Einsatzstück 29 mittels Schrauben 30 austauschbar befestigt ist, welches die Konturierung 31 aufweist.

## Patentansprüche

1. Verfahren zum Herstellen von Polstern mit hinterschäumtem Bezug, wobei ein Bezugstoffabschnitt (14) über einen Formhohlraum (3) gespannt, auf dessen ihn umgebenden Rand (8, 24) niedergehalten, aber unter Einwirkung von Vakuum in den Formhohlraum (3) nachgleiten gelassen und auch an starke längliche Konturierungen (Stege, Rillen) (6, 7) des Formhohlraumes (3) angelegt und angepaßt wird, anschließend hinterschäumt und der entstehende Weichschaumstoffkern aushärten gelassen und das fertige Polster entformt wird, dadurch gekennzeichnet, daß der Bezugstoffabschnitt (14) bereits beim Spannen - den Konturierungen (6, 7) des Formhohlraumes (3) entsprechend - im Bereich von Rand (8, 24) und Spannrahmen (2, 22) wenigstens annähernd angepaßt wird.

2. Vakuumformwerkzeug zum Herstellen von Polstern mit hinterschäumtem Bezug, dessen untere Formwerkzeughälfte (1, 21) einen Formhohlraum (3) mit starken länglichen Konturierungen (Stege, Rillen) (6, 7, 23) aufweist, welcher von einem Rand (8, 24) umgeben ist, wobei diesem Rand (8, 24) ein Spannrahmen (2, 22) zugeordnet ist, dadurch gekennzeichnet, daß auf dem bzw. im Rand (8, 24) den Konturierungen (6, 7) des Formhohlraumes (3) wenigstens annähernd entsprechende und in deren Richtung verlaufende Konturierungen (9, 11, 23) vorgesehen sind und daß der Spannrahmen (2, 22) diesen, dem Rand (8, 24) zugeordneten Konturierungen (9, 11, 23) entsprechende negative Konturierungen (10, 12, 31) aufweist.

3. Vakuumformwerkzeug nach Anspruch 2, dadurch gekennzeichnet, daß die Konturierungen (23, 31) auf Einsatz- bzw. Aufsatzstücken (27, 29) angeordnet sind.

4. Vakuumformwerkzeug nach Anspruch 2 oder 3, dadurch gekennzeichnet, daß sich die Konturierungen (9, 10, 11, 12) nach außen zu erweitern und dabei abflachen.

5. Vakuumformwerkzeug nach einem der Ansprüche 2 bis 4, dadurch gekennzeichnet, daß der zwischen den Konturierungen des Randes (9, 11) und des Spannrahmens (10, 12) gebildete Spalt (13) sich zum Formhohlraum (3) hin verjüngt.

## Claims

1. A process for the production of cushions with a back-foamed covering in which a piece (14) of covering fabric is clamped over a mould (3) and held down at the edge (8, 24) surrounding it, but is also allowed to slip into the mould cavity (3) under the effect of vacuum and is also applied to and adapted to strong elongate contours (fillets, grooves) (6, 7) of the mould cavity (3), is subsequently back-foamed and the flexible foam core formed is allowed to cure, after which the final cushion is demoulded, characterized in that the piece (14) of covering fabric is at least substantially adapted during the actual clamping step – corresponding to the contours (6, 7) of the mould cavity (3) – in the region of the edge (8, 24) and clamping frame (2, 22).

2. A vacuum mould for the production of cushions with a back-foamed covering of which the lower mould half (1, 21) comprises a mould cavity (3) with strong elongate contours (fillets, grooves) (6, 7) which is surrounded by an edge (8, 24), a clamping frame (2, 22) being associated with the edge (8, 24), characterized in that contours (9, 11, 23) at least substantially corresponding to, and extending in the direction of, the contours (6, 7) of the mould cavity (3) are provided on or in the edge (8, 24) and in that the clamping frame (2, 22) comprises negative contours (10, 12, 31) corresponding to the contours (9, 11, 23) associated with the edge (8, 24).

3. A vacuum mould as claimed in claim 2, characterized in that the contours (23, 21) are arranged on inserts or attachments (27, 29).

4. A vacuum mould as claimed in claim 2 or 3, characterized in that the contours (9, 10, 11, 12) widen outwards and, at the same time, flatten out.

5. A vacuum mould as claimed in any of claims 2 to 4, characterized in that the gap (13) formed between the contours of the edge (9, 11) and the clamping frame (10, 12) tapers towards the mould cavity (3).

## Revendications

1. Procédé pour la fabrication de coussins garnis de mousse sur le revers, une portion de matière de revêtement (14) étant tendue par le dessus d'un creux de formage (3), sur le bord (8, 24) duquel elle est serrée, mais avec la faculté de glisser dans le creux de formage (3) sous l'influence du vide et d'être appliquée sur et adaptée à des contours longitudinaux (ailettes, nervures) (6, 7) même épais du creux de formage (3), ensuite pourvue de mousse sur le revers, le noyau de mousse tendre qui se forme étant mis à durcir et le coussin achevé étant démoulé, caractérisé en ce que déjà lors de la tension, la portion de matière de revêtement (14) est adaptée, du moins approximativement dans la zone du bord (8, 24) et du cadre de serrage (2, 22), aux contours (6, 7) du creux de formage (3).

2. Outil de formage sous vide pour la fabrication de coussins garnis de mousse sur le revers, dont la moitié inférieure (1, 21) présente un creux de formage (3) à contours longitudinaux (ailettes, nervures) (6, 7) épais entouré par un bord (8, 24), un cadre de serrage (2, 22) étant conjugué au bord (8, 24), caractérisé en ce que sur, voire dans le bord (8, 24) des contours (9, 11, 23) sont prévus, correspondant, du moins approximativement, aux contours (6, 7) du creux de formage (3) et dirigés dans leur sens, et en ce que le cadre de serrage (2, 22) présente des contours négatifs (10, 12, 31) correspondant à ces contours (9, 11, 23) conjugués au bord (8, 24).

3. Outil de formage sous vide selon la revendication 2, caractérisé en ce que les contours (23, 31) sont placés sur des éléments intercalaires (27, 29).

4. Outil de formage sous vide selon la revendication 2 ou 3, caractérisé en ce que les contours (9, 10, 11, 12) s'évasent vers l'extérieur en s'aplatissant.

5. Outil de formage sous vide selon l'une des revendications 2 à 4, caractérisé en ce que la fente (13) formée entre les contours du bord (9, 11) et du cadre de serrage (10, 12) s'effile en direction du creux de formage (3).

FIG. 1

FIG. 2

FIG. 3

FIG. 4 (A-B)

FIG. 5 (C-D)

FIG. 6